# EUROPEAN PATENT SPECIFICATION

(11) **EP 0 950 485 B1**
(45) Date of publication and mention of the grant of the patent: **04.09.2002**
(21) Application number: 99302835.6
(22) Date of filing: 13.04.1999
(51) Int. Cl.: B29B 13/06, C08C 3/00

(54) **Production process for natural rubber and natural rubber obtained by the same process**
Verfahren zur Herstellung von Naturkautschuk und damit erhaltener Naturkautschuk
Procédé de production de caoutchouc naturel et caoutchouc naturel obtenu selon ce procédé

(30) Priority: 13.04.1998 JP 10128898
(43) Date of publication of application: 20.10.1999
(73) Proprietor: Bridgestone Corporation, Tokyo (JP)
(72) Inventor: Toratani, Hirotoshi, Tokyo (JP)
(74) Representative: Whalley, Kevin

(56) References cited:
- EP-A- 0 613 924
- DE-C- 465 756
- GB-A- 654 329

## Description

### BACKGROUND OF THE INVENTION

### 1. Field of the Invention

The present invention relates to a production process for natural rubber which is improved in both processability and physical properties, and natural rubber obtained by the same process.

### 2. Description of the Related Art

In general, natural rubber is produced in torrid zone countries such as Thailand, Malaysia and Indonesia. Because of excellent physical properties thereof, natural rubber is widely used in large quantities in the rubber industry and the tire industry.

Natural rubber immediately after produced has Mooney viscosity as low as 60 to 70, but the Mooney viscosity goes up close to 90 to 100 for the several months when natural rubber is stored and transported after production (this is called "storage hardening").

A cause of storage hardening of natural rubber is attributed to the fact that variant groups (an aldehyde group and the like) in the isoprene chain are reacted with protein or amino acids existing in the natural rubber to thereby bring about cross-linking and gelation (an increase in a gel amount) (a mechanism thereof has not yet explicitly been made clear as well in literatures).

Gelation in natural rubber results in deteriorating the processability. In general, natural rubber having a larger molecular weight is preferred from the viewpoint of the physical properties, and a reduction in the molecular weight shall exert a detrimental effect on the physical properties of natural rubber.

These molecular weight and gel amount vary markedly depending on conditions of coagulation of rubber from natural rubber latex and drying after water-washing.

Drying conditions in a production step of natural rubber include the following two typical methods. That is, in a ribbed smoked sheet (RSS) graded according to International Standards of Quality and Packaging for Natural Rubber Grades (usually called The Green Book), smoking is carried out at about 60°C for 5 to 7 days. Further, in technically specified rubber (TSR), hot-air drying is carried out at 120 to 140°C for several hours.

However, a problem resides in the point that gelation is accelerated under drying conditions in production of RSS, and a problem resides in the point that the molecular weight is reduced under drying conditions in production of TSR. Further, both RSS and TSR have problems in that a rise in the viscosity is brought about by gelation (storage hardening and the like) and therefore mastication bringing about a reduction in the molecular weight is required.

Further, it is described in British Patent 1472064 that addition of a viscosity stabilizer to natural rubber is effective, and it is further disclosed therein that a hydrazide compound having 8 to 30 carbon atoms is effective as a viscosity stabilizer.

In the publication described above, however, a viscosity stabilizer is not added to natural rubber after coagulation and drying but added to natural rubber in a rubber latex state immediately after production, and in light of an ordinary production step, it is not practical. In addition, it is not referred in the publication described above how the physical properties would change after vulcanization. However, a problem is in that when the hydrazide compound having many carbon atoms as described above is added, a reduction in the physical properties of vulcanized rubber such that the hysteresis loss is larger is observed.

As described above, it is antinomic in conventional techniques to obtain natural rubber having a high molecular weight and a small gel content and exerting no influence on the physical properties of vulcanized rubber when it is turned into a rubber composition. Thus, the current situation is that both can not be satisfied.

Accordingly, the present applicant has filed a patent application for, as means for solving the antinomic problem described above, natural rubber characterized in that it is subjected to drying treatment so that the change in the gel amount is 10 % or less and the molecular weight retention is 85 % or more before and after drying, natural rubber obtained by incorporating a viscosity stabilizer into the above natural rubber subjected to drying treatment, and a production process for natural rubber characterized by subjecting the natural rubber to drying treatment so that the change in the gel amount is 10 % or less and the molecular weight retention is 85 % or more before and after drying (Japanese Patent Application Laid-Open No. Hei 8-67703).

Natural rubber and the production process for the same disclosed in this Japanese Patent Application Laid-Open No. Hei 8-67703 has a problem in that since the drying temperature is fixed, it is difficult to determine the temperature. For example, when drying at a low temperature, though the molecular weight can be maintained, there is a possibility that the moisture content may remain, and drying for long time is required for sufficiently removing this moisture content, so that gelation may be accelerated in some cases. On the other hand, when drying at a high temperature, the moisture content is sufficiently removed, but the molecular weight may be reduced in a certain case.

The present invention is to solve the conventional problems described above of a drying condition at a production step of natural rubber, that is, problems of a drying condition in producing RSS or TSR, and an object thereof is to provide a production process for natural rubber in which gelation is inhibited and the molecular weight is prevented from being reduced and in which both the processability and the physical properties are improved, and natural rubber obtained by the same process.

### SUMMARY OF THE INVENTION

The present inventor has intensively investigated the conventional problems described above and as a result, in view of the fact that the molecular weight and the gel amount of natural rubber vary markedly depending on a coagulation condition of rubber from natural rubber latex and a drying condition after water-washing, he has found that the moisture content after drying exerts large influence on the molecular weight and the gel amount of natural rubber. Further researches have been continued to result in succeeding in achieving a production process for natural rubber which can meet the object described above and natural rubber obtained by the same process, and thus have come to complete the present invention.

According to the present invention a process is provided in accordance with claim 1.

Further embodiments are recited in the dependent claims 2-6.

There is provided a production process for natural rubber in which a reduction in the molecular weight and an increase in the gel amount are small and in which all of the physical properties, the processability and the productivity are improved, and natural rubber obtained by the same process.

Further, a production process for natural rubber in which the processability and the physical properties are further improved by adding a viscosity stabilizer and thus improved natural rubber can be obtained by the same process.

The natural rubber obtained in the present invention according to claims 7-9 can be used for a raw material for tires, belts hoses, and the like.

### BRIEF DESCRIPTION OF THE DRAWING

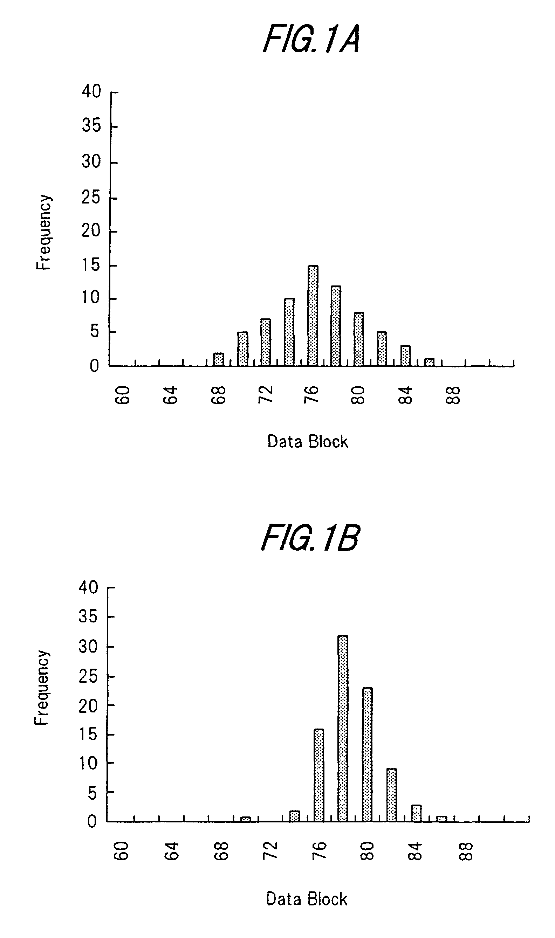

Fig. 1 is a histogram chart showing a frequency in the Mooney viscosity (ML1+4) of natural rubber, wherein (a) is a histogram chart of natural rubber obtained by single stage-drying treatment, and (b) is a histogram chart of natural rubber obtained by two stage-drying treatment.

### DETAILED DESCRIPTION OF THE PREFERRED EMBODIMENTS

The embodiments of the present invention shall be explained below in detail.

The production process for natural rubber according to the drying conditions of the present invention is characterized in that in a production step of natural rubber, that is, a production step of natural rubber produced in the order of tapping-coagulation-washing (washing with water)-dehydration-drying-packing, a drying treatment step after washing and dehydration comprises a multistage of two or more stages.

In the present invention, the drying treatment step after washing and dehydration is carried out in a multistage of two or more stages, and therefore not only a drying condition can be set in every stage depending on the state of the rubber after water-washing, but also a drying condition for the subsequent stage can be set after checking the state of the rubber at the time of finishing of every stage, so that quality of the rubber after drying vary little.

The foregoing drying treatment step in the present invention may be any one as long as it is composed of a multistage of two or more stages and can be composed of, for example, two stages, three stages, four stages or more. The more stages the drying treatment step described above has, the more preferable in terms of maintaining the quality, but the cost tends to grow high.

The drying temperature in the present invention is suitably set according to the kind of natural rubber to be used (produced), the grade thereof and the like, and the drying temperature in every stage is preferably 100°C or higher and 140°C or lower. More preferably, the drying temperature before the final stage is 110°C or higher and 140°C or lower, and the drying temperature in the final stage is 100°C or higher and 130°C or lower.

The drying time is suitably set according to the kind of natural rubber to be used (produced), the grade thereof and the like as is the case with what has been described above, and it is desirable that the drying time before the final stage is 20 minutes or longer and the total of the drying time duration from the first stage to the final stage is 200 minutes or shorter.

Drying machines used in a conventional drying step of natural rubber can be used as a drying machine used under the drying conditions described above and include, for example, an air drier and a vacuum drier.

If the drying temperature in the respective stages described above exceeds 140°C, there is fear that drying goes on to excess so as to lower the molecular weight, and if it is lower than 100°C, the drying time has to be set somewhat longer, so that the gel amount grows in some cases.

If the foregoing drying time before the final stage is shorter than 20 minutes, an effect of rough drainage is not satisfactory, to be specific, a lot of water adhered on the surface of crude rubber in water-washing before the drying treatment step can not be vaporized in a certain case.

The total of the drying time from the first stage to the final stage has been preferably set to 200 minutes or shorter in order to inhibit gelation, and the total time exceeding 200 minutes makes it impossible to control gelation in some cases.

The drying temperature and the drying time in each of the respective stages described above are not set independently but should depend on the state of the rubber at the time of finishing of every stage to set the drying conditions for the subsequent stage. For example, when drying goes on to a considerable extent in a certain stage, drying in the subsequent stages has to be set to relatively low temperature and short time.

In the present invention, a viscosity stabilizer can be added to natural rubber to prepare viscosity stabilizer-containing natural rubber. The viscosity stabilizer may be added either before or after the drying treatment under the conditions described above, and specific restrictions shall not be placed as long as it is added before packing. It is added preferably after water-washing in order to prevent its loss by washing away, more preferably immediately after drying from the viewpoint of the productivity.

With respect to the foregoing viscosity stabilizer-containing natural rubber obtained by adding the viscosity stabilizer after the drying treatment, the viscosity stabilizer is preferably added to and kneaded with the natural rubber as soon as the natural rubber is dried. It is because in the natural rubber after drying, gelation (storage hardening and the like) takes place even while the natural rubber is left to stand at room temperature, and therefore even when the natural rubber is to be stored over a long period of time, the viscosity stabilizer is preferably added as soon as possible after the drying treatment.

In the foregoing production process for natural rubber, strainer treatment may be carried out after mixing the viscosity stabilizer with the natural rubber by means of a mixer, an extruding machine or the like. This provides the natural rubber which has a high molecular weight and is free of contaminants regardless of the timing of the addition of the viscosity stabilizer.

The strainer treatment described above means treatment for removing contaminants contained in viscosity stabilizer-containing natural rubber. A specific example of the strainer treatment includes treatment to remove contaminants by passing viscosity stabilizer-containing natural rubber through a mesh provided at the tip of an extruding machine. The size of the mesh is preferably what corresponds to 0.355 mm (No. 45) prescribed in ASTM E11 but may suitably be changed according to natural rubber produced and the size of contaminants contained in the natural rubber.

Kneading is required for sufficiently mixing the viscosity stabilizer with natural rubber, and kneading and heating (about 120°C) are required for passing the rubber through the strainer. From such a point of view, it is efficient to carry out the mixing of the viscosity stabilizer and the strainer treatment at the same time if the strainer treatment is carried out. Further, in order to prevent gelation during the heating of the rubber, the viscosity stabilizer has to be added before the strainer treatment. For the reasons described above, the strainer treatment is carried out preferably immediately after mixing the viscosity stabilizer.

There can be used as the viscosity stabilizer in the present invention, for example, hydroxylamine sulfate, semicarbazide, dimedone (1,1-dimethylcyclohexane-3,5-dione), and a hydrazide compound represented by the following formula (I):

R-CONHNH₂ (I)

wherein R represents an alkyl group having 1 to 18, preferably 1 to 5 carbon atoms or a cycloalkyl group having 3 to 10, preferably 3 to 5 carbon atoms.

When these viscosity stabilizers are added to natural rubber before or after drying treatment under the conditions described above, they react with variant groups (an aldehyde group and the like) in the natural rubber to block cross-linking sites and suppress the gelation reaction in the natural rubber which causes storage hardening, thereby inhibiting an increase in the gel amount.

In the hydrazide compound represented by the formula (I) described above, an aliphatic hydrazide compound containing an alkyl group having 1 to 18 carbon atoms includes, for example, acetohydrazide, propionohydrazide, butyrohydrazide, caprohydrazide, laurohydrazide, palmitohydrazide and stearohydrazide.

Further, in the hydrazide compound represented by the formula (I) described above, a cyclic hydrazide compound containing a cycloalkyl group having 3 to 10 carbon atoms includes, for example, cyclopropanecarboxylic acid hydrazide and cyclohexanecarboxylic acid hydrazide.

Among the hydrazide compounds described above, the aliphatic hydrazide compounds are more preferred.

It has also been confirmed that when the aliphatic hydrazide compounds described above are added to natural rubber, an odor intensity of the natural rubber is reduced to a level of 1/10 and hence these aliphatic hydrazide compounds are effective as an odor preventive for natural rubber.

The viscosity stabilizers described above are already known, but it has not so far been known at all to add them to natural rubber before or after drying treatment under the conditions described above or to subject natural rubber containing the viscosity stabilizer treated under the drying conditions described above to the strainer treatment. This process has newly been invented by the present inventor. These viscosity stabilizers and the drying treatment under the conditions described above have made it possible to inhibit an increase in the gel amount and prevent a reduction in the molecular weight.

Among the viscosity stabilizers described above, the hydrazide compounds represented by the formula (I) can safely be handled and has a high gelation-inhibiting effect. In addition, the gelation-inhibiting effect thereof continues over a long period of time from the time when they are added. Further, they do not deteriorate the physical properties of the rubber composition to a large extent. Accordingly, they are preferred.

The preferable amount of the viscosity stabilizer is in the range of from 0.001 part by weight or more to 3.0 parts by weight or less per 100 parts by weight of the natural rubber and more preferably in the range of from 0.01 part by weight or more to 3.0 parts by weight.

If the amount of the viscosity stabilizer is less than 0.001 part by weight, the viscosity-stabilizing effect can not sufficiently be achieved in some cases. If the adding amount of the viscosity stabilizer exceeds 3.0 parts by weight, it remains in the rubber composition and deteriorates a low heat-generating property of the rubber composition and dispersibility of carbon black and other compounding chemicals in a certain case, and therefore such amounts are not preferred.

The adding amount thereof varies slightly depending on the kind of the natural rubber to be used (produced) and the kind of the viscosity stabilizer to be used.

For example, in the case of hydroxylamine sulfate, semicarbazide and dimedone, the preferable amount is 0.01 to 2.0 parts by weight.

In the case of hydrazide compounds represented by the formula (I) described above in which R is an alkyl group having 2 to 18 carbon atoms or a cycloalkyl group having 3 to 10 carbon atoms, the preferable range is from 0.01 to 1.0 part by weight, more preferably from 0.03 to 0.5 part by weight, and in the case of acetohydrazide in which R has one carbon atom, the preferable range is 0.04 part by weight or more.

The viscosity stabilizer suitable for the use in the present invention may be used alone or in combination of two or more kinds.

In the production process of the present invention, since the drying treatment step after water-washing is constituted of a multistage of two or more stages, not only the drying conditions in every stage can be set, as described above, depending on the state of the rubber after water-washing, but also the state of the rubber can be checked at the time of finishing of the respective stages and then the drying conditions of the subsequent stage can be set, so that an intended inhibition in gelation and prevention of a reduction in the molecular weight can be achieved.

The natural rubber obtained after treated and dried under the drying treatment conditions described above has preferably a molecular weight of one million or more, more preferably 1.3 million or more. If the natural rubber has a molecular weight of less than one million, the physical properties of the rubber composition to which the natural rubber is applied are not satisfactory in a certain case.

Further, the dried natural rubber of the present invention has preferably a gel amount of 15 % by weight or less, more preferably 10 % by weight or less. If the natural rubber has a gel amount exceeding 15 % by weight, the physical properties of the rubber composition to which the natural rubber is applied are not satisfactory in a certain case.

Further, the volatile matter after drying is preferably 1.2 % by weight or less. If the volatile matter exceeds 1.2 % by weight, the volatile matter contained in the finished product exceeds a prescribed value of 0.8 % by weight in some cases.

In the present invention, a viscosity stabilizer-containing natural rubber can more efficiently achieve an inhibition in gelation and a prevention of a reduction in the molecular weight regardless of the timing of the addition of the viscosity stablizer. These points shall be explained in further detail in the examples which shall be described later.

The natural rubber treated under the drying treatment conditions described above may be compounded, if necessary, with optional components such as fillers, reinforcing agents, softening agents, vulcanizing agents, vulcanization accelerators, accelerator activators and antioxidants to obtain a rubber composition.

### EXAMPLES

The present invention shall specifically be explained below in detail with reference to test examples and examples.

### Test Example 1

An unsmoked sheet (5 ton) was dried under the drying treatment conditions shown below by means of an air drier used as a drier, and then propionohydrazide was added as a viscosity stabilizer in an amount of 0.1 part by weight per 100 parts by weight of natural rubber (hereinafter abbreviated as 0.1 phr) to determine the Mooney viscosity (ML 1+4) at 100°C according to JIS K 6300-1994.

### Drying treatment conditions:

(1) Single-stage drying treatment
   Drying temperature: 120°C
   Drying time: 120 minutes
(2) Two-stage drying treatment
   Drying temperature: 120°C in the first stage and
      110°C in the second stage
   Drying time: 60 minutes in the first stage and
      60 minutes in the second stage

In the two-stage drying treatment, treatment in the first stage was carried out in the first drying chamber under the drying temperature and time conditions described above, and then the natural rubber treated in the first drying chamber was moved to the second drying chamber for the second stage to be treated under the drying temperature and time conditions described above.

The single-stage drying treatment described above was carried out 70 times to measure the respective Mooney viscosities (ML 1+4), and the two-stage drying treatment was carried out 86 times to measure the respective Mooney viscosities (ML 1+4).

These results are shown in Fig. 1 (a) and (b). Fig. 1 (a) and (b) are histogram charts showing a data block of the Mooney viscosity in an abscissa and a frequency in an ordinate, respectively. An average value, a standard deviation, a maximum value (MAX), a minimum value (MIN) and a number of times of tests (N) of these Mooney viscosities (ML 1+4) are shown in the following Table 1.

**Table 1**

| | Single-stage drying treatment | Two-stage drying treatment |
|---|---|---|
| ML 1+4 Average value | 76.2 | 77.8 |
| Standard deviation | 4.33 | 2.24 |
| MAX | 86.0 | 84.0 |
| MIN | 66.0 | 71.0 |
| Number of times of measuring (N) | 70 | 86 |

As apparent from the results shown in the above Table 1 and in Fig. 1 (a) and (b), when comparing the single-stage drying treatment with the two-stage drying treatment, it has become clear from the average values, the standard deviations and others of the Mooney viscosities (ML 1+4) that the natural rubber subjected to the two-stage drying treatment which falls in the scope of the present invention scatters less in a Mooney viscosity (ML 1+4) than the natural rubber subjected to the conventional single-stage drying treatment and the stable quality of natural rubber can be maintained.

Examples in which the two-stage drying treatment falling in the scope of the present invention was carried out shall be shown below.

### Examples 1 to 9

An unsmoked sheet (5 ton) was dried under the drying treatment conditions shown in the following Table 2 by means of an air drier used as a drier, and then propionohydrazide was added as a viscosity stabilizer in an amount of 0.1 phr to determine the gel amount, the molecular weight, the Mooney viscosity and the volatile matter according to the following methods.

To describe the drying treatment conditions in detail, drying in the first stage was carried out in the first drying chamber under the drying conditions shown in the following Table 2, and then the natural rubber treated in the first drying chamber was moved to the second drying chamber for the second stage to be dried under the drying conditions shown in the following Table 2.

These results are shown in the following Table 2.

### (1) Gel amount

A rubber piece of 0.2 g was dissolved in toluene (60 ml) of an extra pure grade, and a toluene-insoluble matter was separated by a centrifugal method and dried. Then, the gel amount was determined.

### (2) Molecular weight

The molecular weight was determined by gel permeation chromatography, wherein used respectively were a gel permeation chromatograph HCL-8020 manufactured by TOSOH CORPORATION as a measuring apparatus, GMHXL manufactured by TOSOH CORPORATION as a column, standard polystyrene manufactured by TOSOH CORPORATION for calibration, THF of an extra pure grade as a solvent, and a solution dissolved 0.01g of a sample in 30ml of THF.

### (3) Mooney viscosity (ML 1+4)

The Mooney viscosity was measured at 100°C according to JIS K 6300-1994.

### (4) Volatile matter

Measured according to JIS K 6352-1997.

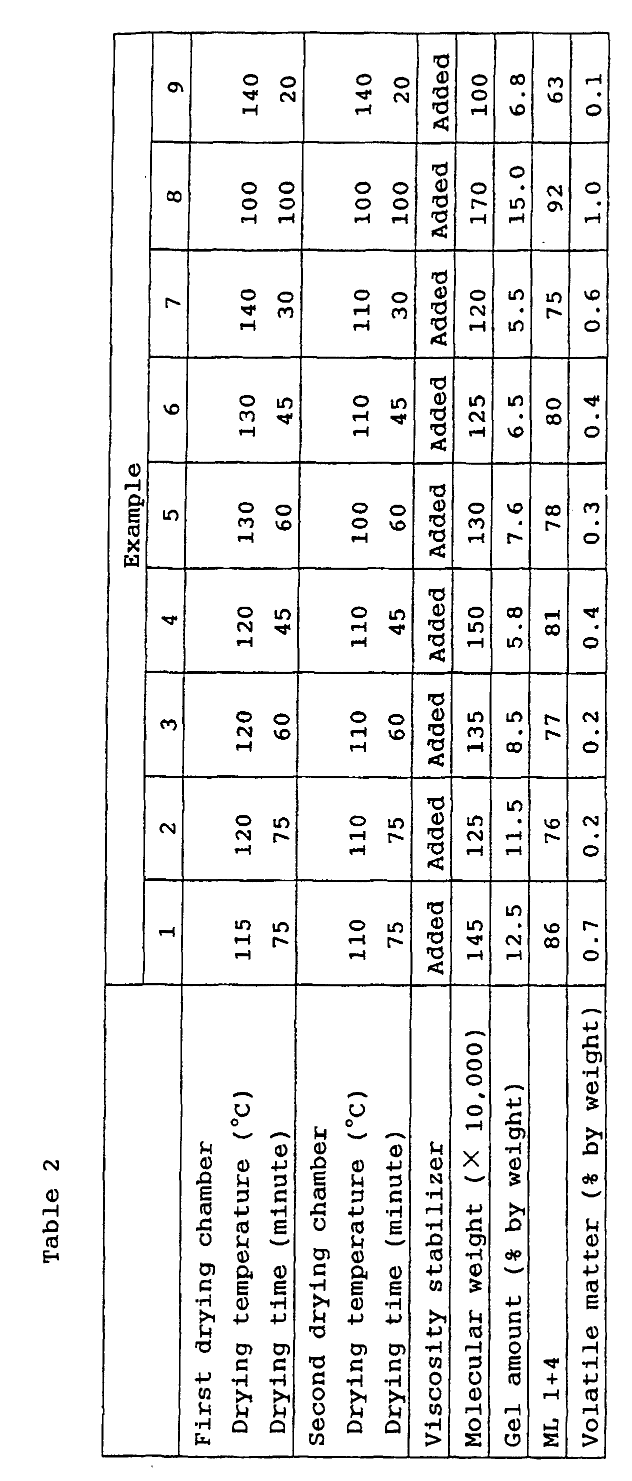

The following findings have become clear from the results summarized in Table 2 shown above.

In Examples 1 to 9, treatment was carried out under the drying treatment conditions of the present invention; in Examples 1 to 7, the drying temperatures in the first stage were elevated more than the drying temperatures in the second stage which was the final stage; and in Examples 8 and 9, treatment was carried out under the same drying temperature conditions in the first stage as in the second stage which was the final stage.

It has been confirmed that even if the drying treatment conditions (drying temperature and drying time) are changed as long as they fall in the scope of the present invention, an increase in the gel amount of natural rubber and a reduction in the molecular weight thereof due to the drying treatment are inhibited and the volatile matters are small.

## Claims

1. A production process for natural rubber, wherein a drying treatment step after water-washing comprises a multistage of two or more stages, and wherein a drying temperature in the final stage is from 100°C to 140°C

2. A process as claimed in claim 1, wherein a drying temperature before a final stage is from 100°C to 140°C.

3. A process as claimed in claim 1 or 2, wherein the total of drying time from the first stage to the final stage is 200 minutes or shorter.

4. A process as claimed in any of claims 1 to 3, wherein a viscosity stabilizer is added before drying treatment.

5. A process as claimed in any of claims 1 to 3, wherein a viscosity stabilizer is added after drying treatment.

6. A process as claimed in claim 4 or 5, wherein the viscosity stabilizer is a hydrazide compound represented by the following formula (I):
R-CONHNH₂ (I)
wherein R represents an alkyl group having 1 to 18 carbon atoms or a cycloalkyl group having 3 to 10 carbon atoms.

7. A natural rubber obtained by the production process as claimed in any of claims 1 to 6.

8. A natural rubber as claimed in claim 7, wherein the gel amount after drying is 15% by weight or less.

9. A natural rubber as claimed in claim 7 or 8, wherein the molecular weight after drying is one million or more.

## Patentansprüche

1. Verfahren zur Herstellung von Naturkautschuk, wobei der Trocknungsbehandlungsschritt nach dem Wasserwaschen einen mehrstufigen Prozeß mit zwei oder mehr Stufen aufweist, und wobei die Trocknungstemperatur bei der Endstufe zwischen 100°C und 140°C liegt.

2. Verfahren wie in Anspruch 1 beansprucht, wobei die Trocknungstemperatur vor der Endstufe zwischen 100°C und 140°C liegt.

3. Verfahren wie in Anspruch 1 oder 2 beansprucht, wobei die gesamte Trocknungszeit von der ersten Stufe bis zu der Endstufe 200 Minuten oder weniger beträgt.

4. Verfahren wie in irgendeinem der Ansprüche 1 bis 3 beansprucht, wobei ein Viskositätsstabilisator vor der Trocknungsbehandlung zugegeben wird.

5. Verfahren wie in irgendeinem der Ansprüche 1 bis 3 beansprucht, wobei der Viskositätsstabilisator nach der Trocknungsbehandlung zugegeben wird.

6. Verfahren wie in Anspruch 4 oder 5 beansprucht, wobei der Viskositätsstabilisator eine Hydrazidverbindung ist, die durch die folgende Formel (I) repräsentiert wird:
R-CONHNH₂ (I)
wobei R eine Alkylgruppe mit 1 bis 18 Kohlenstoffatomen oder eine Cycloalkylgruppe mit 3 bis 10 Kohlenstoffatomen repräsentiert.

7. Naturkautschuk, erhalten durch das in irgendeinem der Ansprüche 1 bis 6 beanspruchte Herstellungsverfahren.

8. Naturkautschuk wie in Anspruch 7 beansprucht, wobei die Gelmenge nach dem Trocknen 15 Gewichtsprozent oder weniger beträgt

9. Naturkautschuk wie in Anspruch 7 oder 8 beansprucht, wobei das Molekulargewicht nach dem Trocknen eine Million oder mehr ist.

## Revendications

1. Procédé de production de caoutchouc naturel, dans lequel une étape de traitement de séchage après un lavage à l'eau comprend un stade multiple à deux ou plusieurs étapes, et dans lequel la température de séchage dans l'étape finale est de 100°C à 140°C.

2. Procédé selon la revendication 1, dans lequel la température de séchage avant le stade final est de 100°C à 140°C.

3. Procédé selon la revendication 1 ou la revendication 2, dans lequel la somme du temps de séchage depuis la première étape jusqu'à l'étape finale est de 200 minutes ou moins.

4. Procédé selon l'une quelconque des revendications 1 à 3, dans lequel un stabilisant de viscosité est ajouté avant le traitement de séchage.

5. Procédé selon l'une quelconque des revendications 1 à 3, dans lequel un stabilisant de viscosité est ajouté après le traitement de séchage.

6. Procédé selon la revendication 4 ou 5, dans lequel le stabilisant de viscosité est un composé hydrazide représenté par la formule (I) suivante:
R-CONHNH₂ (I)
dans laquelle R représente un groupe alkyle ayant 1 à 18 atomes de carbone ou un groupe cycloalkyle ayant 3 à 10 atomes de carbone.

7. Caoutchouc naturel obtenu par le procédé de production tel que revendiqué dans l'une quelconque des revendications 1 à 6.

8. Caoutchouc naturel selon la revendication 7, dans lequel la quantité de gel après séchage est de 15% en poids ou moins.

9. Caoutchouc naturel selon la revendication 7 ou 8, dans lequel le poids moléculaire après séchage est d'un million ou plus.
